(19) Europäisches Patentamt
European Patent Office
Office européen des brevets

(11) **EP 3 595 323 A1**

(12) **EUROPEAN PATENT APPLICATION**
published in accordance with Art. 153(4) EPC

(43) Date of publication:
**15.01.2020 Bulletin 2020/03**

(51) Int Cl.:
***H04N 21/44*** (2011.01)

(21) Application number: **19749171.5**

(22) Date of filing: **19.03.2019**

(86) International application number:
**PCT/CN2019/078727**

(87) International publication number:
**WO 2019/218770 (21.11.2019 Gazette 2019/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.05.2018 CN 201810483025**

(71) Applicant: **Gosuncn Technology Group Co., Ltd.**
**Guangzhou City, Guangdong 510670 (CN)**

(72) Inventors:
• **LI, Jiebin**
  **Guangzhou City, Guangdong 510670 (CN)**

• **HUANG, Tongyu**
  **Guangzhou City, Guangdong 510670 (CN)**
• **WANG, Gang**
  **Guangzhou City, Guangdong 510670 (CN)**
• **SONG, Yibing**
  **Guangzhou City, Guangdong 510670 (CN)**
• **HOU, Yuqing**
  **Guangzhou City, Guangdong 510670 (CN)**
• **LIU, Shuangguang**
  **Guangzhou City, Guangdong 510670 (CN)**

(74) Representative: **Meyer, Thorsten**
**Meyer Patentanwaltskanzlei**
**Pfarrer-Schultes-Weg 14**
**89077 Ulm (DE)**

(54) **VIDEO PLAYING METHOD FOR SYNCHRONOUSLY DISPLAYING AR INFORMATION**

(57) A video playing method for synchronously displaying AR information includes capturing a video code stream containing AR information by an AR camera; extracting the AR information from the video code stream frame by frame, generating subtitle information during said extraction, and storing the subtitle information as a subtitle file; storing the video code stream after said extraction as a video file; combining the subtitle file with the video file to create a general video file; and parsing and playing the general video file on a third-party player. The video with AR information captured by an AR camera can be parsed by a third-party player and synchronously displayed along with the video play.

capturing a video code stream containing AR information by an AR camera — S1

extracting the AR information from the video code stream frame by frame, generating subtitle information during said extraction, and storing the subtitle information as a subtitle file — S2

storing the video code stream after said extraction as a video file — S3

combining the subtitle file with the video file to create a general video file — S4

parsing and playing the general video file on a third-party player — S5

Fig. 1

**Description**

FIELD OF THE INVENTION

The present invention relates to video playing technology of augmented reality (AR), and in particular to a video playing method for synchronously displaying AR information.

BACKGROUND OF THE INVENTION

Augmented Reality (AR) refers to a technique for calculating the position and angle of camera images in real time and adding corresponding images, videos, and 3D models on the camera images. AR information is added to the video code stream captured by the AR camera. The AR information refers to a label at a corresponding position of the target, such a label records the attributes of the target, such as name, geographic location, introduction, and characteristics, etc.. In the process of playing the video code stream, the AR information needs to be parsed, so that the AR information can be displayed synchronously with the video play. However, the existing general third-party player can only parse audio files, video files and subtitle files, but cannot parse the AR information. Therefore, it is necessary to find a method of playing the video captured by the AR camera in a general third-party player.

SUMMARY OF THE INVENTION

In view of the above deficiencies, a video playing method for synchronously displaying AR information is provided, which makes the video with AR information captured by an AR camera be parsed by a third-party player and synchronously displayed along with the video play.

As a first aspect of the present invention, a video playing method for synchronously displaying AR information, includes steps of:

> S1, capturing a video code stream containing AR information by an AR camera;
> S2, extracting the AR information from the video code stream frame by frame, generating subtitle information during said extraction, and storing the subtitle information as a subtitle file;
> S3, storing the video code stream after said extraction as a video file;
> S4, combining the subtitle file with the video file to create a general video file; and
> S5, parsing and playing the general video file on a third-party player.

The AR information is stored in the video code streams when the AR camera captures a video, before parsed and played on the third-party player, it's necessary to extract the AR information from the video code streams since the conventional third-party player could not parse the AR information in the video code streams. The extraction process includes reading the video code streams frame by frame and extracting the AR information from each frame; generating subtitle information during the extraction of the AR information and storing the subtitle information as a subtitle file; storing the rest video code stream after the extraction of the AR information as a video file; combining the subtitle file with the video file to create a general video file; and finally parsing and playing the general video file on a third-party player. In such a way, the AR information can be synchronously played during the video play.

Further, the subtitle information includes display time, display coordinates and display contents for each of the AR information.

During the video play and the AR information synchronous display, it is necessary to know which time point or time period the AR information appears in the video playback, where the AR information appears in the frames, and to know the specific display contents of the AR information. Therefore, the subtitle information generated in the extraction process of the AR information frame by frame from the video code stream including the display time, display coordinates, and display contents of each of the AR information is necessary.

Further, the method further includes if the AR information appears in a $V_1$ frame of the video code stream and disappears in a $V_2$ frame, time of the $V_1$ frame is indicated as $t_1$, time of the $V_2$ frame is indicated as $t_1$, and time of a first frame of the video code stream is indicated as to, determining a starting display time of the AR information with a difference between $t_1$ and $t_0$, and an ending display time of the AR information with a difference between $t_2$ and to.

During reading the video code stream frame by frame, if a certain AR information is extracted starting from the $V_1$ frame and ending at the $V_2$ frame, that is, the display time of the AR information is from time $t_1$ of the $V_1$ frame to time $t_2$ of the $V_2$ frame, and time of the first frame being indicated as $t_0$, thus the display time of the AR information starts at time $t=t_1-t_0$ and ends at time $t=t_2-t_0$.

Further, the method further includes calculating the display coordinates ($\Delta x$, $\Delta y$), according to parameters of the AR camera during each frame of the video capturing and a three-dimensional coordinate ($p$, $t$) of a target appeared in each frame of the video code stream and corresponding to the AR information; wherein $p$ and $t$ respectively represent horizontal angles and vertical angles of the AR information in a three-dimensional spherical polar coordinate system, $\Delta x$ and $\Delta y$ respectively represent horizontal offset and vertical offset of the AR information in a center of a screen of the third-party player.

$p$ and $t$ respectively represent horizontal angles and vertical angles of the AR information in a three-dimensional spherical polar coordinate system, $\Delta x$ and $\Delta y$ respectively represent horizontal offsets and vertical offsets of the AR information in the center of the screen of the third-party player.

When the AR camera rotates or zooms, the position of the target on the screen changes during the video playback, and the display position of the AR information needs to follow the movement of the target on the screen, therefore there is a need to recalculate the display coordinates of the AR information. In view of this, in the process of extracting the video code stream frame by frame, the parameters of the AR camera and the three-dimensional coordinates $(p, t)$ of the target corresponding to the AR information appearing are acquired frame by frame, and the display coordinates of the AR information for each frame are calculated according to the parameters and the coordinates $(p, t)$.

Further, the parameters comprises lens horizontal angle P, lens vertical angle T, and horizontal field V; and

the displaying coordinates $(\Delta x, \Delta y)$ are calculated by formulas
$$\begin{cases} \Delta y = \dfrac{R*\left(\tan T*\cos t - \sin t*\cos \Delta p\right)}{\cos t*\cos \Delta p + \tan T*\sin t} \\ \Delta x = \tan \Delta p*\left(R*\cos t - \Delta y*\sin t\right) \end{cases}$$ and $\Delta p = p - P$, wherein Tan, sin, and cos respectively represent a tangent function, a sine function, and a cosine function, screen resolution during the play of the general video file is WxH, and R representing a spherical radius meets $R = \dfrac{W/2}{\tan\left(V/2\right)}$.

By using the above formulas, based on the lens horizontal angle P, lens vertical angle T, and horizontal field V for each frame, the position of the target on the screen of each frame, namely the display coordinate $(\Delta x, \Delta y)$ on the screen for the AR information can be calculated quickly. It should be noted that the three-dimensional coordinates $(p, t)$ of the target of the AR information are in world coordinates.

In addition, the formula $\begin{cases} \Delta y = \dfrac{R*\left(\tan T*\cos t - \sin t*\cos \Delta p\right)}{\cos t*\cos \Delta p + \tan T*\sin t} \\ \Delta x = \tan \Delta p*\left(R*\cos t - \Delta y*\sin t\right) \end{cases}$ can be transformed as below:

$$\Delta y = \frac{R*\left(\tan T*\cos t - \sin t*\cos \Delta p\right)}{\cos t*\cos \Delta p + \tan T*\sin t}$$

$$\Delta x = \tan \Delta p*\left(R*\cos t - \Delta y*\sin t\right)$$
$$= R*\tan \Delta p*\cos t - \tan \Delta p*\sin t*\frac{R*\left(\tan T*\cos t - \sin t*\cos \Delta p\right)}{\cos t*\cos \Delta p + \tan T*\sin t}.$$

Further, the display contents are text contents of the AR information.

Further, the step of S2 specifically comprises: according to different display contents of the AR information and/or different targets corresponding to the AR information, forming different types of AR information based on a preset rule, extracting the different types of AR information from the video code stream, and storing the subtitle information as different subtitle files; and the step of S4 specifically comprises: upon a user request, combining the subtitle files or a portion of the subtitle files with the video files to create the general video file.

When different users watch the same video, the targets of interest are different, and the display content of the AR information that is desired to be seen is also different. For example, in a video showing nearby streetscapes, students will pay more attention to those stores in the screen about stationeries, toys, snacks etc., and will be more interested in seeing the introductions for these stores. While the restaurant owners will pay more attention to the eateries in the screen, and will be more interested in seeing the main dishes of the eateries. Therefore, in the process of reading the video code stream frame by frame, it is necessary to divide the AR information into different types according to different display contents and/or different targets, and store them in different subtitle files, respectively. Flexibly, upon different user demands, different subtitle files can be selected to create a general video file by combination with the video file.

Further, the step of S5 specifically comprises: upon a user request, parsing and playing the subtitle files or a portion of the subtitle files and the video files on the third-party player.

When the general video file is parsed and played, if there are too many subtitle files parsed together with the video file, overmuch AR information will appear in the screen, causing the user to be dazzled when watching the video, and even the screen will be filled with the AR information. Therefore, it's necessary to make the subtitle file selectable upon the user demand, and parse and play the selected subtitle file together with the video file.

Further, the present invention provides a video playing device for synchronously displaying AR information, and the device includes a processor, a memory, and computer programs stored in the memory and configured to be executed by the processor, wherein the video playing method above is achieved when the processor executes the computer programs.

Further, the present invention provides a computer readable storage medium, and the medium includes one or more computer instructions, wherein the video playing method above is performed when the computer instructions are run.

In comparison with the prior arts, the above technical solution has the following advantages.

1. The AR information in the video code stream captured by the AR camera is extracted frame by frame, the extracted AR information is stored as a subtitle file, and the video code stream the AR information is extracted is stored as a video file, and the subtitle file and the video file are combined into a general video file that can be parsed and played by a third-party player, so that the video containing the AR information captured by the AR camera can be played in a general third-party player, and the AR information is synchronously displayed during the video playing process.
2. According to different display contents of the AR information and different targets corresponding to the AR information, the AR information is classified, and different types of AR information are stored as different subtitle files, therefore the desired type of AR information can be synchronous displayed with the video.

BRIEF DESCRIPTION OF THE DRAWINGS

Fig. 1 is a flow chart of a video playing method according to an embodiment of the present invention;

Fig. 2 is a schematic diagram of a screen in a playing process of a general video file according to an embodiment of the present invention;

Fig. 3 is a schematic diagram of an operation when selecting a subtitle file according to an embodiment of the present invention;

FIG. 4 is a schematic diagram of a screen after a subtitle file is selected according to an embodiment of the present invention;

FIG. 5 is another schematic diagram of a screen after another subtitle file is selected according to an embodiment of the present invention; and

FIG. 6 is a schematic diagram of an electronic device according to an embodiment of the present invention.

DETAILED DESCRIPTION OF ILLUSTRATED EMBODIMENTS

The drawings are for illustrative purposes only and are not to be construed as limiting the invention.

In order to better illustrate the embodiments, some components of the drawings may be omitted, enlarged or reduced, which does not represent the actual product size.

It will be apparent to those skilled in the art that certain known structures and their descriptions may be omitted.

In the description of the present invention, it is to be understood that the terms "first" and "second" are used for descriptive purposes only and are not to be construed as indicating or implying a relative importance or implying number of technical features indicated. Thus, the defined "first", "second" features may include one or more features, either explicitly or implicitly. In the description of the present invention, "a plurality" means two or more unless otherwise stated.

The technical solution of the present invention will be further described below with reference to the accompanying drawings and embodiments.

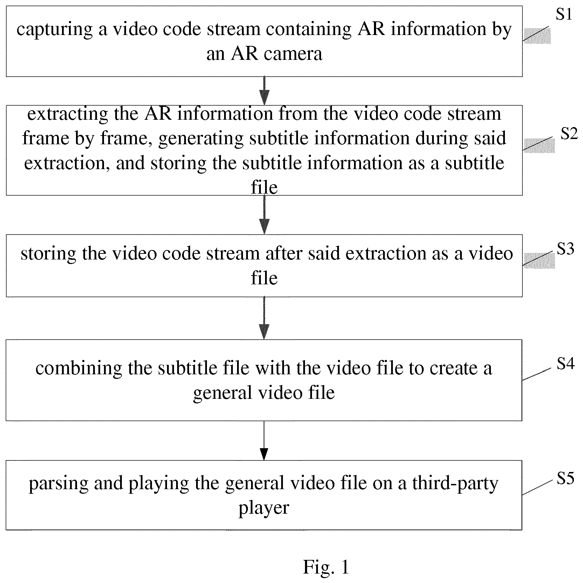

Referring to Fig. 1, the video playing method for synchronously displaying AR information includes the following steps:

S1, capturing a video code stream containing AR information by an AR camera;

S2, extracting the AR information from the video code stream frame by frame, generating subtitle information during said extraction, and storing the subtitle information as a subtitle file;

S3, storing the video code stream after said extraction as a video file;

S4, combining the subtitle file with the video file to create a general video file; and

S5, parsing and playing the general video file on a third-party player.

Specifically, the AR information is stored in the video code streams when the AR camera captures a video, before parsed and played on the third-party player, it's necessary to extract the AR information from the video code streams since the current third-party player could not parse the AR information in the video code streams. The extraction process includes reading the video code streams frame by frame and extracting the AR information from each frame; generating subtitle information during the extraction of the AR information and storing the subtitle information as a subtitle file; storing the rest video code stream after the extraction of the AR information as a video file; combining the subtitle file with the video file to create a general video file; and finally parsing and playing the general video file on a third-party player. In such a way, the AR information can be synchronously played during the video play.

In the present embodiment, the subtitle information includes display time, display coordinates and display contents for each of the AR information.

During the video play and the AR information synchronous display, it is necessary to know which time point or time period the AR information appears in the video playback, where the AR information appears in the frames, and to know the specific display contents of the AR information. Therefore, the subtitle information generated in the extraction process of the AR information frame by frame from the video code stream including the display time, display coordinates, and display contents of each of the AR information is necessary.

In the present embodiment, the display time of the AR information in the subtitle information is generated by the following steps: if the AR information appears in a $V_1$ frame of the video code stream and disappears in a $V_2$ frame, time of the $V_1$ frame is indicated as $t_1$, time of the $V_2$ frame is indicated as $t_1$, and time of a first frame of the video code stream is indicated as to, then the display time of the AR information starts at time $t=t_1-t_0$ and ends at time $t=t_2-t_0$.

During reading the video code stream frame by frame, if a certain AR information is extracted starting from the $V_1$ frame and ending at the $V_2$ frame, that is, the display time of the AR information is from time $t_1$ of the $V_1$ frame to time $t_2$ of the $V_2$ frame, and time of the first frame being indicated as $t_0$, thus the display time of the AR information starts at time $t=t_1-t_0$ and ends at time $t=t_2-t_0$.

In the present embodiment, the display coordinate of the AR information in the subtitle information is generated by the following steps: calculating the displaying coordinate ($\Delta x$, $\Delta y$), according to parameters of the AR camera during each frame of the video capturing and a three-dimensional coordinate ($p$, $t$) of a target appeared in each frame of the video code stream and corresponding to the AR information.

Specifically, $p$ and $t$ respectively represent horizontal angles and vertical angles of the AR information in a three-dimensional spherical polar coordinate system, $\Delta x$ and $\Delta y$ respectively represent horizontal offsets and vertical offsets of the AR information in the center of the screen of the third-party player.

When the AR camera rotates or zooms, the position of the target on the screen changes during the video playback, and the display position of the AR information needs to follow the movement of the target on the screen, therefore there is a need to recalculate the display coordinates of the AR information. In view of this, in the process of extracting the video code stream frame by frame, the parameters of the AR camera and the three-dimensional coordinates ($p$, $t$) of the target corresponding to the AR information appearing are acquired frame by frame, and the display coordinates of the AR information for each frame are calculated according to the parameters and the coordinates ($p$, $t$).

In the present embodiment, the parameters comprises lens horizontal angle P, lens vertical angle T, and horizontal field V; and the display coordinates ($\Delta x$, $\Delta y$) are calculated by formulas

$$\begin{cases} \Delta y = \dfrac{R*\left(\tan T * \cos t - \sin t * \cos \Delta p\right)}{\cos t * \cos \Delta p + \tan T * \sin t} \\ \Delta x = \tan \Delta p * \left(R * \cos t - \Delta y * \sin t\right) \end{cases}$$ and $\Delta p = p - P$, wherein Tan, sin, and cos respectively represent a tangent function, a sine function, and a cosine function, screen resolution during the play of the general video file is WxH, and R representing a spherical radius meets the formula $R = \dfrac{W/2}{\tan\left(V/2\right)}$.

By using the above formulas, based on the lens horizontal angle P, lens vertical angle T, and horizontal field V for each frame, the position of the target on the screen of each frame, namely the display coordinate ($\Delta x$, $\Delta y$) on the screen for the AR information can be calculated quickly. It should be noted that the three-dimensional coordinates ($p$, $t$) of the target of the AR information are in world coordinates.

In addition, the formula $\begin{cases} \Delta y = \dfrac{R*\left(\tan T*\cos t - \sin t*\cos\Delta p\right)}{\cos t*\cos\Delta p + \tan T*\sin t} \\ \Delta x = \tan\Delta p*\left(R*\cos t - \Delta y*\sin t\right) \end{cases}$ can be transformed as below:

$$\Delta y = \frac{R*\left(\tan T*\cos t - \sin t*\cos\Delta p\right)}{\cos t*\cos\Delta p + \tan T*\sin t}$$

$$\Delta x = \tan\Delta p*\left(R*\cos t - \Delta y*\sin t\right)$$
$$= R*\tan\Delta p*\cos t - \tan\Delta p*\sin t*\frac{R*\left(\tan T*\cos t - \sin t*\cos\Delta p\right)}{\cos t*\cos\Delta p + \tan T*\sin t}\,.$$

In this embodiment, the display content of the AR information in the subtitle information is the text content of the AR information, describing the attributes of the target such as name, geographic location, introduction, or characteristics, etc.

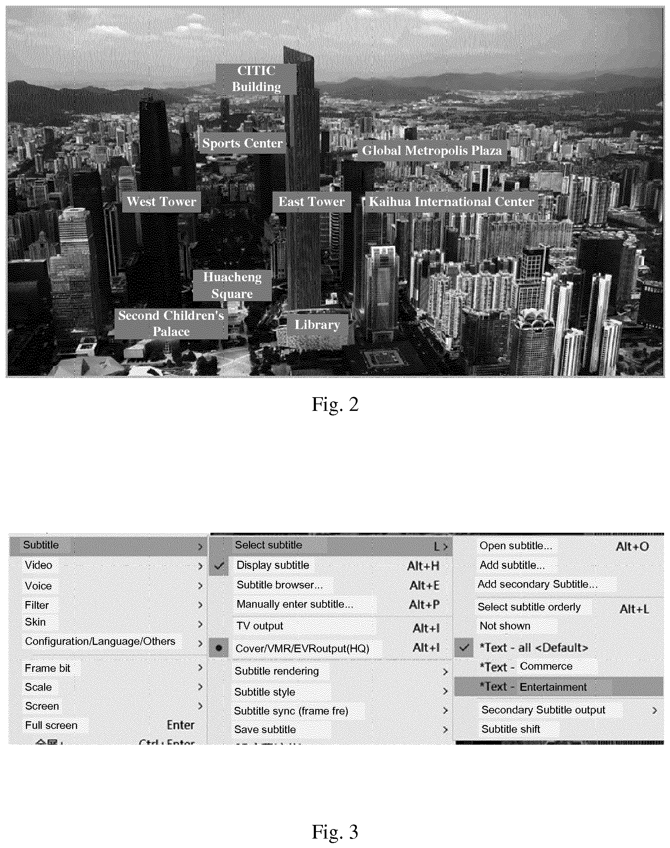

As illustrated in Fig. 2, a certain general video file is parsed with a subtitle file and a video file on a third-party player, and the subtitle file and the video file are played synchronously, thereby achieving synchronous display for the AR information and the video. In this example, building groups captured by the AR camera are shown in the screen when the video file is played, and the names of the buildings are shown on the corresponding building when the subtitle file is played, for example, Second Children's Palace, West Tower, Huacheng Square, Sports Center, CITIC Building, Library, East Tower, Kaihua International Center, and Global Metropolis Plaza.

In this embodiment, the step S2 includes: according to different display contents of the AR information and/or different targets corresponding to the AR information, forming different types of AR information based on a preset rule, extracting the different types of AR information from the video code stream, and storing the subtitle information as different subtitle files; and the step of S4 specifically includes: upon a user request, combining the subtitle files or a portion of the subtitle files with the video files to create the general video file.

When different users watch the same video, the targets of interest are different, and the display content of the AR information that is desired to be seen is also different. For example, in a video showing nearby streetscapes, students will pay more attention to those stores in the screen about stationeries, toys, snacks etc., and will be more interested in seeing the introductions for these stores. While the restaurant owners will pay more attention to the eateries in the screen, and will be more interested in seeing the main dishes of the eateries. Therefore, in the process of reading the video code stream frame by frame, it is necessary to divide the AR information into different types according to different display contents and/or different targets, and store them in different subtitle files, respectively. Flexibly, upon different user demands, different subtitle files can be selected to create a general video file by combination with the video file.

In this embodiment, the step S5 includes: upon a user request, parsing and playing the subtitle files or a portion of the subtitle files and the video files on the third-party player.

When the general video file is parsed and played, if there are too many subtitle files parsed together with the video file, overmuch AR information will appear in the screen, causing the user to be dazzled when watching the video, and even the screen will be filled with the AR information. Therefore, it's necessary to make the subtitle file selectable upon the user demand, and parse and play the selected subtitle file together with the video file.

In the specific implement of the present invention, the AR information shown in Fig. 2 can be categorized according to the functions of the buildings, and the subtitle information can be stored as different subtitle files. For example, Second Children's Palace, Huacheng Square, Sports Center and Library are categorized as a type of entertainment, and stored as a first subtitle file; West Tower, CITIC Building, East Tower, Kaihua International Center and Global Metropolis Plaza are categorized as a type of commerce, and stored as a second subtitle file.

As shown in Fig. 3, upon the user request, the subtitle file can be screened, for example, selecting the first subtitle file ("Text - Entertainment") or the second subtitle file (Text - Commerce) or all subtitle files ("Text - all") to be parsed and played along with the video file.

If all subtitle files are selected to play along with the video file, the screen is shown as the Fig. 2, all AR information, namely all buildings are shown.

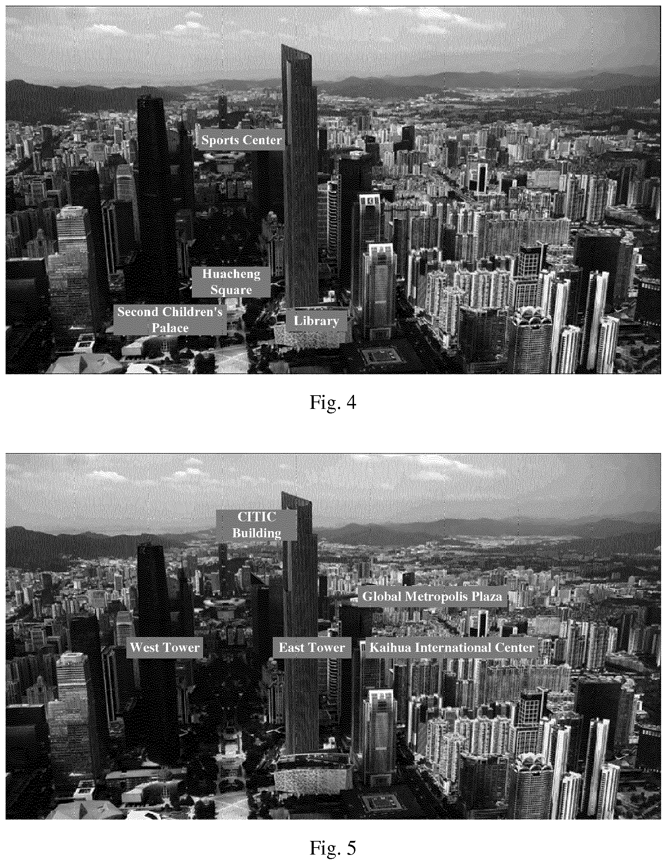

If the first subtitle file is selected to play along with the video file, the screen is shown as the Fig. 4, the AR information only for the type of entertainment is shown: Second Children's Palace, Huacheng Square, Sports Center and Library.

If the second subtitle file is selected to play along with the video file, the screen is shown as the Fig. 5, the AR information only for the type of commerce is shown: West Tower, CITIC Building, East Tower, Kaihua International Center and Global Metropolis Plaza.

The same or similar reference numerals indicate the same or similar parts.

The positional relationship described in the drawings is for illustrative purposes only and is not to be construed as limiting the invention.

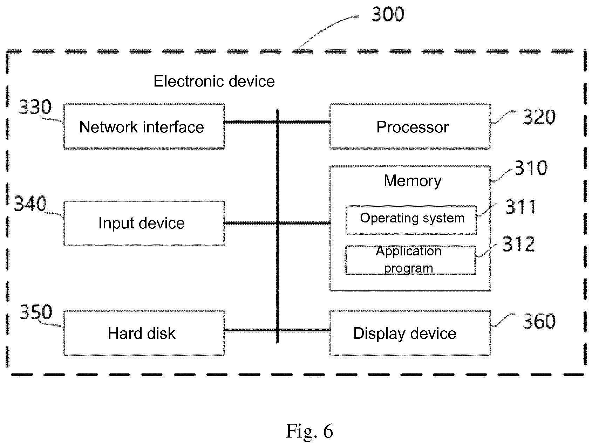

As illustrated in Fig. 6, the invention provides an electronic device 300 including a memory 310 for storing one or more computer instructions and a processor 320 for calling and executing said one or more computer instructions, thereby implanting the above method 100.

That is, the electronic device 300 includes a processor 320, a memory 310, and computer programs stored in the memory 310 and configured to be executed by the processor 320, and the video playing method is achieved when the processor 320 executes the computer programs.

Furthermore, as shown in Fig. 6, the electronic device 300 further includes a network interface 330, an input device 340, a hard disk 350 and a display device 360.

Each of the above interfaces and devices can be interconnected by bus architecture. The bus architecture can be a bus and bridge that can include any number of interconnects. One or more central processing units (CPUs), represented by one or more processors 320, and various circuits of one or more memories represented by memory 310 are coupled together. The bus architecture can also connect various other circuits such as peripherals, voltage regulators, and power management circuits. It will be appreciated that the bus architecture is used to implement connection communication between these components. The bus architecture includes, in addition to the data bus, a power bus, a control bus, and a status signal bus, all of which are well known in the art and therefore will not be described in detail herein.

The network interface 330 is connected to the networks (eg. Internet, LAN, etc.) to obtain data and store it in the hard disk 350.

The input device 340 is configured to receive various instructions input by the user and sends them to the processor 320. The input device 340 can include a keyboard or pointing devices (eg. mouse, trackball, touch panel or touch screen).

The display device 360 is configured to display the result of the processor 320 executing the instructions.

The memory 310 is configured to store programs and data necessary for the operating system to run, and intermediate data calculated by the processor 320 in the calculation process.

It is to be understood that the memory 310 in the embodiments of the present invention may be a volatile memory or a non-volatile memory, or may include both volatile and non-volatile memory. The non-volatile memory may be a read only memory (ROM), a programmable read only memory (PROM), an erasable programmable read only memory (EPROM), an electrically erasable programmable read only memory (EEPROM), or Flash memory. Volatile memory can be random access memory (RAM), which acts as an external cache. The memory 310 of the apparatus and methods described herein is intended to comprise, without being limited to, these and any other suitable types of memory.

In some embodiments, the memory 310 stores the following elements, executable modules or data structures, or subsets thereof, or extension sets thereof: operating system 31 and programs 312.

Specifically, the operating system 311 includes various system programs, such as a framework layer, a core library layer, a driver layer, and the like, for implementing various basic services and processing hardware-based tasks. The application programs 312 include various applications, such as a browser, for implementing various application services. A program implementing the method of the embodiment of the present invention may be included in the application programs 312.

When the processor 320 calls and executes the application and data stored in the memory 310, specifically, the program or instruction stored in the application 312, a video code stream containing the AR information is captured through the AR camera, the AR information is extracted frame by frame from the video code stream, the subtitle information is generated in the extraction process, and the subtitle information is stored as a subtitle file; the video code stream without the AR information extracted is stored as a video file, and the subtitle file and the video file are combined to create a generic video file which is parsed and played in a third-party player.

The method disclosed in the above embodiments of the present invention may be applied to the processor 320 or implemented by the processor 320. The processor 320 may be an integrated circuit chip with signal processing capabilities. In the implementation process, each step of the foregoing method may be completed by an integrated logic circuit of hardware in the processor 320 or instructions in a form of software. The processor 320 described above may be a general purpose processor, a digital signal processor (DSP), an application specific integrated circuit (ASIC), a field programmable gate array (FPGA) or other programmable logic devices, a discrete gate or transistor logic device, or discrete hardware, which can implement or execute the above methods, steps or logic blocks according to the embodiments of the present invention. The general purpose processor may be a microprocessor, or the processor, or any conventional processor or the like. The steps of the method disclosed in the embodiments of the present invention may be directly implemented by the hardware decoding processor, or may be performed by a combination of hardware and software modules in the decoding processor. The software module can be located in a conventional storage medium such as random access memory, flash memory, read only memory, programmable read only memory or electrically erasable programmable memory, registers, and the like. The storage medium is located in the memory 310, and the processor 320 reads the information in the memory 310 and completes the steps of the above method in combination with its hardware.

It will be appreciated that the embodiments described herein can be implemented in hardware, software, firmware, middleware, microcode, or a combination thereof. For hardware implementations, the processing unit can be implemented in one or more application specific integrated circuits (ASICs), digital signal processors (DSPs), digital signal processing devices (DSPDs), programmable logic devices (PLDs), field programmable gate arrays (FPGAs).), a general purpose processor, a controller, a microcontroller, a microprocessor, other electronic units for performing the functions described herein, or a combination thereof.

For software implementations, the techniques described herein can be implemented by modules (eg, procedures, functions, and so on) that perform the functions described herein. The software code can be stored in memory and executed by the processor. The memory can be implemented in the processor or external to the processor.

Specifically, the processor 320 is further configured to read the computer programs to perform the method described in any of the above.

In the several embodiments provided in the present application, it should be understood that the disclosed method and apparatus may be implemented in other manners. For example, the device embodiments described above are merely illustrative. For example, the division of the unit is only a logical function division. In actual implementation, there may be another division manner, for example, multiple units or components may be combined or integrated into another system, or some features can be ignored or not executed. In addition, the mutual coupling or direct coupling or communication connection shown or discussed may be an indirect coupling or communication connection through some interfaces, devices or units, and may be in electrical, mechanical or other forms.

In addition, each functional unit in each embodiment of the present invention may be integrated into one processing unit, or each unit may be physically included separately, or two or more units may be integrated into one unit. The above integrated unit can be implemented in the form of hardware or in the form of combinations of hardware and software.

The above-described integrated unit implemented in the form of a software functional unit can be stored in a computer readable storage medium. The above software functional unit is stored in a storage medium and includes a plurality of instructions for causing a computer device (which may be a personal computer, a server, or a network device, etc.) to perform part of the steps of the transceiving method of the various embodiments of the present invention. The foregoing storage medium includes a U disk, a mobile hard disk, a Read-Only Memory (ROM), a Random Access Memory (RAM), a disk or an optical disk, and the like, which can store program codes.

While the disclosure has been described in connection with what are presently considered to be the most practical and preferable embodiments, it is to be understood that the disclosure is not to be limited to the disclosed embodiments, but on the contrary, is intended to cover various modifications and equivalent arrangements included within the spirit and scope of the disclosure.

It is apparent that the above-described embodiments of the present invention are merely illustrative of the present invention and are not intended to limit the embodiments of the present invention. Other variations or modifications of the various forms may be made by those skilled in the art in light of the above description. There is no need and no way to exhaust all of the implementations. Any modifications, equivalent substitutions and improvements made within the spirit and scope of the invention are intended to be included within the scope of the appended claims.

**Claims**

1.  A video playing method for synchronously displaying AR information, comprising steps of:

    S1, capturing a video code stream containing AR information by an AR camera;
    S2, extracting the AR information from the video code stream frame by frame, generating subtitle information during said extraction, and storing the subtitle information as a subtitle file;
    S3, storing the video code stream after said extraction as a video file;
    S4, combining the subtitle file with the video file to create a general video file; and
    S5, parsing and playing the general video file on a third-party player.

2.  The video playing method for synchronously displaying AR information according to claim 1, wherein the subtitle information comprises display time, display coordinates and display contents for each of the AR information.

3.  The video playing method for synchronously displaying AR information according to claim 2, further comprising: if the AR information appears in a $V_1$ frame of the video code stream and disappears in a $V_2$ frame, time of the $V_1$ frame is indicated as $t_1$, time of the $V_2$ frame is indicated as $t_1$, and time of a first frame of the video code stream is indicated as to, determining a starting display time of the AR information with a difference between $t_1$ and $t_0$, and an ending display time of the AR information with a difference between $t_2$ and to.

4.  The video playing method for synchronously displaying AR information according to claim 2, further comprising calculating the display coordinates $(\Delta x, \Delta y)$, according to parameters of the AR camera during each frame of the video capturing and a three-dimensional coordinate $(p, t)$ of a target appeared in each frame of the video code stream and corresponding to the AR information; wherein $p$ and $t$ respectively represent horizontal angles and vertical angles of the AR information in a three-dimensional spherical polar coordinate system, $\Delta x$ and respectively represent horizontal offset and vertical offset of the AR information in a center of a screen of the third-party player.

5.  The video playing method for synchronously displaying AR information according to claim 4, wherein the parameters comprises lens horizontal angle P, lens vertical angle T, and horizontal field V; and the displaying coordinates ($\Delta x$, $\Delta y$) are calculated by formulas $\begin{cases} \Delta y = \dfrac{R*(\tan T*\cos t - \sin t*\cos \Delta p)}{\cos t*\cos \Delta p + \tan T*\sin t} \\ \Delta x = \tan \Delta p*(R*\cos t - \Delta y*\sin t) \end{cases}$ and $\Delta p = p - P$, wherein Tan, sin, and cos respectively represent a tangent function, a sine function, and a cosine function, screen resolution during the play of the general video file is WxH, and R representing a spherical radius meets $R = \dfrac{W/2}{\tan(V/2)}$.

6.  The video playing method for synchronously displaying AR information according to claim 2, wherein the display contents are text contents of the AR information.

7.  The video playing method for synchronously displaying AR information according to any of claims 2-6, wherein the step of S2 specifically comprises: according to different display contents of the AR information and/or different targets corresponding to the AR information, forming different types of AR information based on a preset rule, extracting the different types of AR information from the video code stream, and storing the subtitle information as different subtitle files; and the step of S4 specifically comprises: upon a user request, combining the subtitle files or a portion of the subtitle files with the video files to create the general video file.

8.  The video playing method for synchronously displaying AR information according to claim 7, the step of S5 specifically comprises: upon a user request, parsing and playing the subtitle files or a portion of the subtitle files and the video files on the third-party player.

9.  A video playing device for synchronously displaying AR information, comprising: a processor, a memory, and computer programs stored in the memory and configured to be executed by the processor, wherein the video playing method according to any one of claims 1-8 is achieved when the processor executes the computer programs.

10. A computer readable storage medium, comprising one or more computer instructions, wherein the video playing method according to any one of claims 1-8 is performed when the computer instructions are run.

capturing a video code stream containing AR information by an AR camera                    S1

extracting the AR information from the video code stream frame by frame, generating subtitle information during said extraction, and storing the subtitle information as a subtitle file                    S2

storing the video code stream after said extraction as a video file                    S3

combining the subtitle file with the video file to create a general video file                    S4

parsing and playing the general video file on a third-party player                    S5

Fig. 1

Fig. 2

Fig. 3

Fig. 4

Fig. 5

Fig. 6

# EP 3 595 323 A1

## INTERNATIONAL SEARCH REPORT

| International application No. |
|---|
| **PCT/CN2019/078727** |

### A. CLASSIFICATION OF SUBJECT MATTER

H04N 21/44(2011.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNKI, CNABS, CNTXT, VEN: 视频, 字幕, 文字, 文本, 提示, 属性, 转换, 转化, 生成, 产生, 提取, 增强现实, 虚拟现实, AR, VR, video, subtitle, text, character, message, present, property, transform, generate, extract

### C. DOCUMENTS CONSIDERED TO BE RELEVANT

| Category* | Citation of document, with indication, where appropriate, of the relevant passages | Relevant to claim No. |
|---|---|---|
| X | CN 107872731 A (SAMSUNG ELECTRONICS (CHINA) R & D CENTER ET AL.) 03 April 2018 (2018-04-03) <br> description, paragraphs 0042-0098, and figures 1-4 | 1-10 |
| A | CN 106162204 A (CHUANXIAN NETWORK TECHNOLOGY (SHANGHAI) CO., LTD.) 23 November 2016 (2016-11-23) <br> entire document | 1-10 |
| A | CN 106375830 A (ARCVIDEO TECHNOLOGIES CO., LTD.) 01 February 2017 (2017-02-01) <br> entire document | 1-10 |
| A | CN 105635712 A (VISIONSTAR INFORMATION TECHNOLOGY (SHANGHAI) CO., LTD.) 01 June 2016 (2016-06-01) <br> entire document | 1-10 |
| A | US 2014245145 A1 (ALTICAST CORP.) 28 August 2014 (2014-08-28) <br> entire document | 1-10 |
| PX | CN 108600858 A (GOSUNCN TECHNOLOGY GROUP CO., LTD.) 28 September 2018 (2018-09-28) <br> claims 1-8, description, paragraphs 0003-0074, and figures 1-5 | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 May 2019** | **20 June 2019** |

| Name and mailing address of the ISA/CN | Authorized officer |
|---|---|
| **State Intellectual Property Office of the P. R. China** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

14

INTERNATIONAL SEARCH REPORT
Information on patent family members

International application No.

**PCT/CN2019/078727**

| Patent document cited in search report | | | Publication date (day/month/year) | Patent family member(s) | | | Publication date (day/month/year) |
|---|---|---|---|---|---|---|---|
| CN | 107872731 | A | 03 April 2018 | None | | | |
| CN | 106162204 | A | 23 November 2016 | None | | | |
| CN | 106375830 | A | 01 February 2017 | None | | | |
| CN | 105635712 | A | 01 June 2016 | CN | 105635712 | B | 19 January 2018 |
| | | | | CN | 107682688 | A | 09 February 2018 |
| US | 2014245145 | A1 | 28 August 2014 | KR | 20140106161 | A | 03 September 2014 |
| | | | | US | 9514367 | B2 | 06 December 2016 |
| | | | | KR | 101537665 | B1 | 20 July 2015 |
| CN | 108600858 | A | 28 September 2018 | None | | | |

Form PCT/ISA/210 (patent family annex) (January 2015)